Europäisches Patentamt

European Patent Office

Office européen des brevets

(11) Veröffentlichungsnummer: **0 310 972 B1**

(12) **EUROPÄISCHE PATENTSCHRIFT**

(45) Veröffentlichungstag der Patentschrift: **19.02.92**

(21) Anmeldenummer: **88116264.8**

(22) Anmeldetag: **30.09.88**

(51) Int. Cl.5: **C09D 131/00**, C09D 133/00, C08L 67/06

(54) **Unter dem Einfluss von Radikalen härtbare Mischungen und ihre Verwendung als Spachtelmassen.**

(30) Priorität: **09.10.87 DE 3734162**

(43) Veröffentlichungstag der Anmeldung:
**12.04.89 Patentblatt 89/15**

(45) Bekanntmachung des Hinweises auf die
Patenterteilung:
**19.02.92 Patentblatt 92/08**

(84) Benannte Vertragsstaaten:
**AT BE CH DE ES FR GB IT LI NL SE**

(56) Entgegenhaltungen:
**EP-A- 0 144 703**
**DE-A- 3 110 835**
**FR-A- 1 540 413**

(73) Patentinhaber: **BAYER AG**

**W-5090 Leverkusen 1 Bayerwerk(DE)**

(72) Erfinder: **Meixner, Jürgen, Dr.**
**Josef-Brocker-Dyk 56**
**W-4150 Krefeld(DE)**
Erfinder: **Clemens, Horst**
**Flensburgerzeile 1 F**
**W-4150 Krefeld(DE)**
Erfinder: **Sickert, Armin**
**Schreberstrasse 9**
**W-4150 Krefeld(DE)**
Erfinder: **Wamprecht, Christian, Dr.**
**Bahnhofstrasse 51**
**W-4040 Neuss 22(DE)**

**Beschreibung**

Die Erfindung betrifft radikalisch aushärtbare Mischungen auf Basis von ungesättigten Polyesterharzen, die als Haftvermittler einen speziellen (Meth)acryloylgruppen enthaltenden Polyester enthalten und die Verwendung dieser Mischungen als Spachtelmassen.

Ungesättigte Polyesterharze und ihre Verwendung als Bindemittel für Spachtelmassen sind seit langem bekannt (vgl. z.B. Glasurit-Handbuch "Lacke und Farben", 11. Auflage, S. 530 f., C.R. Vincents-Verlag, Hannover 1984). Es handelt sich bei den Polyesterharzen im wesentlichen um Lösungen von ungesättigten Polyestern in copolymerisierbaren Vinylmonomeren. Diese Produkte sind preisgünstig, einfach zu verarbeiten und besitzen gute Schleifbarkeiten bei kurzen Trocknungszeiten.

In letzter Zeit werden aus Gründen des Korrosionsschutzes immer mehr verzinkte Metallteile beim Kraftfahrzeugbau eingesetzt. Spachtelmassen auf Basis ungesättigter Polyesterharze, mit denen solche Teile nach z.B. einem Schadensfall ausgebessert werden sollen, besitzen jedoch auf verzinktem Untergrund nur eine schlechte Haftung. Es hat deshalb nicht an Versuchen gefehlt, diesen Polyesterharzen Substanzen beizugeben, die eine bessere Haftung bewirken sollen. Deren Wirkung (wie z.B. dimere Acrylsäure), ist aber noch völlig unzureichend. Durch ihr niedriges Molekulargewicht sind sie zudem leicht flüchtig, was Geruchsprobleme mit sich bringt. Außerdem sind sie stark hautreizend.

Aufgabe der vorliegenden Erfindung war es deshalb, neue Spachtelmassen auf Basis ungesättigter Polyesterharze zu entwickeln, die sowohl auf elektrolytisch wie auch auf feuerverzinktem Metall gut haften und dabei die gewohnten guten Eigenschaften des bisherigen Spachtelmaterialien behalten.

Überraschenderweise konnte diese Aufgabe durch die Bereitstellung der nachstehend näher beschriebenen, erfindungsgemäßen Mischungen gelöst werden.

Gegenstand der Erfindung sind somit unter dem Einfluß von Radikalen härtbare Mischungen enthaltend
A) 100 Gew.-Teile einer ungesättigten Polyesterharz-Komponente, bestehend aus einer Mischung aus (i) mindestens einem $\alpha,\beta$-ethylenisch ungesättigten Polyester und (ii) mindestens einem copolymerisierbaren, olefinisch ungesättigten Monomeren, wobei in der Mischung 30 bis 75 Gew.-Teile der Komponente (i) und 70 bis 25 Gew.-Teile der Komponente (ii) vorliegen,
B) insgesamt 100 bis 300 Gew.-Teilen mindestens eines inerten Füllstoffs,
C) 0,5 bis 5 Gew.-Teilen eines Haftvermittlers
und gegebenenfalls
D) weitere Hilfs- und Zusatzstoffe,
dadurch gekennzeichnet, daß es sich bei der Komponente C) um mindestens einen (Meth)acryloylgruppen enthaltenden Polyester handelt, der hergestellt worden ist, indem man
a) 0,5 bis 1,0 Mol einer ungesättigten Dicarbonsäure-Komponente, bestehend aus mindestens einer $\alpha,\beta$-ungesättigten Dicarbonsäure und/oder mindestens einem Anhydrid einer derartigen Säure
mit einem Hydroxylgruppen aufweisenden Kondensationsprodukt aus
b) 0 bis 0,5 Mol einer Dicarbonsäure-Komponente, bestehend aus mindestens einer aromatischen, gesättigten oder ungesättigten aliphatischen und/oder gesättigten oder ungesättigten cycloaliphatischen Dicarbonsäure und/oder mindestens einem Anhydrid einer derartigen Säure,
c) 0,5 bis 1,0 Mol einer höherfunktionellen Polyolkomponente, bestehend aus mindestens einem, gegebenenfalls Ethergruppen aufweisenden 3- oder 4-wertigen Alkohol des Molekulargewichtsbereichs 92 bis 500,
d) 0 bis 0,5 Mol einer Diolkomponente, bestehend aus mindestens einem, gegebenenfalls Etherbrücken aufweisenden zweiwertigen Alkohol des Molekulargewichtsbereichs 62 bis 300 und
e) 1,0 bis 2,0 Mol einer ungesättigten Monocarbonsäure-Komponente bestehend aus Acrylsäure, Methacrylsäure oder einem Gemisch dieser Säuren
unter Esterbildung zur Reaktion bringt, wobei die Mengenverhältnisse der Komponenten b) bis e) so gewählt werden, daß nach der Herstellung des Kondensats noch 0,5 bis 1,0 Mol an freien Hydroxylgruppen vorliegen.

Gegenstand der Erfindung ist auch die Verwendung dieser Mischungen als Spachtelmassen.

Bei der Komponente A) handelt es sich um "ungesättigte Polyesterharze". Hierunter sind im Sinne der Erfindung Mischungen aus (i) $\alpha,\beta$-ethylenisch ungesättigten Polyestern mit (ii) copolymerisierbaren Monomeren zu verstehen, wobei in den Mischungen 30 bis 75 Gew.-Teile der Komponente (i) und 70 bis 25 Gew.-Teile der Komponente (ii) vorliegen.

Bei den $\alpha,\beta$-ethylenisch ungesättigten Polyestern handelt es sich um die üblichen Polykondensationsprodukte von (i) mindestens einer $\alpha,\beta$-ethylenisch ungesättigten Dicarbonsäure mit 4 bis 5 Kohlenstoffatomen wie Maleinsäure, Fumarsäure oder Itaconsäure oder deren esterbildenden Derivate, insbesondere deren Anhydride wie z.B. Maleinsäureanhydrid, gegebenenfalls in Abmischung mit bis zu 90 Mol-%, bezogen auf die ungesättigten Dicarbonsäuren, mindestens einer aliphatischen, gesättigten Dicarbonsäure mit 4 bis 10 Kohlenstoffatomen wie Bernsteinsäure, Adipinsäure oder Sebacinsäure oder einer gegebenenfalls ungesättigten cycloaliphatischen Dicarbonsäure mit 8 bis 10 Kohlenstoffatomen wie Tetrahydrophthalsäure oder Hexahydrophthalsäure oder den esterbildenden Derivaten derartiger Säuren mit (ii) mindestens einer aliphatischen Polyhydroxyverbindung, insbesondere Dihydroxyverbindung mit 2 bis 8 Kohlenstoffatomen wie Ethylenglykol, Diethylenglykol, Propylenglykol, Dipropylenglykol, 1,6-Hexandiol, 1,8-Octandiol oder beliebigen Gemischen derartiger Diole. Die Herstellung derartiger Polyester ist bekannt und z.B. bei J.R. Lawrence, "Polyester Resins", Reinhold Publ. Corp., New York 1960, S. 18 ff., und im Kunststoff-Handbuch, Bd. VIII ("Polyester"), Carl Hanser Verlag, München 1973, s. 247-312 beschrieben.

Die Säurezahlen der ungesättigten Polyester sollen zwischen 1 und 100, vorzugsweise zwischen 20 und 70, die OH-Zahlen zwischen 10 und 150, vorzugsweise zwischen 20 und 100, und die als Zahlenmittel gemessenen Molekulargewichte $M_n$ zwischen ca. 500 und 5000, vorzugsweise zwischen ca. 1000 und 3000 liegen (dampfdruckosmometrisch gemessen in Dioxan und Aceton; bei differierenden Werten wird der niedriger als der korrekte angesehen).

Bei dem copolymerisierbaren Monomeren handelt es sich im allgemeinen um Styrol. Geeignet sind jedoch auch z. B. Vinyltoluol, Diallylphthalat, Methylacrylat, Vinylacetat, N-Vinylpyrrolidon oder beliebige Gemische derartiger Monomerer.

Bei der Komponente B), die in Mengen von 100 bis 300, vorzugsweise 150 bis 250 Gew.-Teilen pro 100 Gew.-Teilen der Komponente A) eingesetzt wird, handelt es sich um an sich bekannte Füllstoffe wie z.B. Kreide, Talkum oder Baryt.

Bei der erfindungswesentlichen Komponente C), die in Mengen von 0,5 bis 5, vorzugsweise 1 bis 3 Gew.-Teilen pro 100 Gew.-Teilen der Komponente A) eingesetzt wird, handelt es sich um (Meth)-acryloylgruppen aufweisende Polyester.

Wesentlich für die gute haftvermittelnde Wirkung dieser Komponente ist, daß sie freie, von der ungesättigten Dicarbonsäure-Komponente a) herrührende Carboxylgruppen aufweist. Die Herstellung des Polyesters erfolgt daher durch Umsetzung dieser Komponente a) mit einem aus den übrigen Komponenten b) bis e) hergestellten Vorkondensat.

Bei der Komponente a) handelt es sich um $\alpha,\beta$-ungesättigte Dicarbonsäuren, der bereits bei der Herstellung der ungesättigten Polyesterharze A) genannten Art bzw. um die Anhydride derartiger Säuren. Besonders bevorzugt wird als Komponente a) Maleinsäureanhydrid eingesetzt.

Als Komponente b) eignen sich die gleichen ungesättigten Dicarbonsäuren bzw. ungesättigten Dicarbonsäureanhydride, wie sie auch als Komponente a) Verwendung finden. Außerdem eignen sich als Komponente b) aromatische Dicarbonsäuren wie Phthalsäure, Isophthalsäure oder Terephthalsäure oder Anhydride von aromatischen Dicarbonsäuren wie Phthalsäureanhydrid. Als Komponente b) ebenfalls geeignet sind aliphatische oder cycloaliphatische Dicarbonsäuren bzw. deren Anhydride, wie sie bereits oben beispielhaft bei der Beschreibung der ungesättigten Polyester erwähnt sind. Auch beliebige Gemische derartiger Dicarbonsäuren bzw. Dicarbonsäureanhydride können als Komponente b) verwendet werden.

Bei der Komponente c) handelt es sich um mindestens einen 3- oder 4-wertigen, gegebenenfalls Ethergruppen aufweisenden Alkohol des Molekulargewichts 92 bis 500 wie beispielsweise Glycerin, Trimethylolpropan, Trimethylolethan, Butantriole, Pentantriole, Hexantriole, Pentaerythrit oder die Ethoxylierungs- und/oder Propoxylierungsprodukte derartiger Alkohole mit einem innerhalb der genannten Grenzen liegenden Molekulargewicht.

Bei der Komponente d) handelt es sich um mindestens einen zweiwertigen, gegebenenfalls Etherbrücken aufweisenden Alkohol des Molekulargewichtsbereichs 62 bis 300 wie z.B. Ethylenglykol, 1,2-Dihydroxypropan, 1,3-Dihydroxypropan, 1,2-, 1,3- oder 1,4-Dihydroxybutan, die isomeren Pentandiole, Hexandiole, 2-Ethylenhexandiol oder die Ethoxylierungs- und/oder Propoxylierungsprodukte derartiger Alkohole mit einem innerhalb der genannten Grenzen liegenden Molekulargewicht.

Bei der Komponente e) handelt es sich um Acrylsäure, Methacrylsäure oder um beliebige Mischungen dieser Säuren.

Die Komponenten b) bis e) werden bei der Herstellung des Kondensats in den obengenannten Mengenverhältnissen miteinander zur Reaktion gebracht, worauf jedoch darauf zu achten ist, daß in dem Kondensat nach seiner Herstellung 0,5 bis 1,0 Mol an freien Hydroxylgruppen vorliegen. Dies bedeutet, daß die Alkoholkomponenten gegenüber den Säurekomponenten stets in einem entsprechenden Überschuß zur Anwendung gelangen müssen.

Zur Herstellung des Vorkondensats kann beispielsweise so vorgegangen werden, daß man die Komponenten b) bis e) in Gegenwart eines wasserunlöslichen Lösungsmittels und eines sauren Katalysators und eines Inhibitors unter azeotropen Bedingungen solange auf 75 bis 130 °C erhitzt bis sich kein Wasser mehr abscheidet.

Die weitere Umsetzung dieses Vorkondensats kann unmittelbar im Anschluß an seine Herstellung durch Zugabe der Komponente a) erfolgen. Im Falle der Verwendung von Säureanhydriden als Komponente a) wird man hierzu zunächst das im Vorkondensat noch vorliegende Lösungsmittel destillativ entfernen und die Reaktion mit dem Anhydrid a) bei 50 bis 100°C bis zum vollständigen Umsatz des Anhydrids durchführen. Im Falle der Verwendung von Dicarbonsäuren als Komponente a) kann die Umsetzung mit dem Vorkondensat unter den gleichen azeotropen Bedingungen stattfinden, die bereits zur Herstellung des Vorkondensats zur Anwendung gelangten. In einem solchen Falle würde man daher das Lösungsmittel erst nach Beendigung der Gesamtreaktion destillativ entfernen. Natürlich kann auch bei Verwendung eines Anhydrids auf diese Weise verfahren werden.

Wie bereits oben ausgeführt, ist es wesentlich, daß in dem letztendlich erhaltenen Polyester C) freie, von der Komponente a) herrührende Carboxylgruppen vorliegen. Dies wird dadurch sichergestellt, daß man die Menge der Komponente a) im Falle der Verwendung von freien Säuren innerhalb der obengenannten molaren Grenzen hält und gleichzeitig darauf achtet, daß das Äquivalentverhältnis von Carboxylgruppen der Komponente a) zu Hydroxylgruppen des Vorkondensats (entsprechend dem Hydroxyl-Überschuß bei der Herstellung des Vorkondensats) bei ca. 1,5:1 bis 2:1 hält. Im Falle der Verwendung von Säureanhydriden als Komponente a) liegt das Molverhältnis von Anhydridgruppen der Komponente a) zu Hydroxylgruppen des Vorkondensats im allgemeinen bei 0,75:1 bis 1:1.

Saure Katalysatoren, die bei der Herstellung des Vorkondensats eingesetzt werden können sind z.B. Schwefelsäure, p-Toluolsulfonsäure und Naphthalinsulfonsäure. Sie werden in Mengen von 0,1 bis 3 Gew.-%, bezogen auf Summe der Komponenten b) bis e), eingesetzt. Falls gewünscht, können auch mehrere Katalysatoren eingesetzt werden.

Geeignete Inhibitoren bzw. Stabilisatoren, die bei der Herstellung des Vorkondensats vorzugsweise mitverwendet werden, sind z.B. in "Methoden der organischen Chemie" (Houben-Weyl), 4. Auflage, Band XIV/1, S. 433 ff., Georg Thieme Verlag, Stuttgart 1961, beschrieben. Die Stabilisatoren werden im allgemeinen in Mengen von 0,01 bis 0,3 Gew.-%, bezogen auf die Summe der Komponenten b) bis e) eingesetzt.

Geeignete Lösungsmittel zur Herstellung des Vorkondensats sind beispielsweise Benzol, Toluol, Cyclohexan, Isooktan oder Gemische derartiger Lösungsmittel.

Bei der, gegebenenfalls in den erfindungsgemäßen Mischungen vorliegenden Komponente D) handelt es sich um übliche Hilfs- und Zusatzstoffe wie beispielsweise Pigmente, Beschleuniger für die Kalthärtung (Härtung bei Raumtemperatur) wie Kobaltsalze in Form der Naphthenate oder Octoate oder tert.-Amine wie z.B. N,N-Dimethylanilin, N,N-Diethylanilin oder N,N-Diethyl-m-toluidin, die üblichen Thixotropiermittel und/oder die üblichen Netzmittel.

Die Herstellung der als Spachtelmassen verwendbaren, erfindungsgemäßen Mischungen erfolgt durch einfaches Abmischen der genannten Einzelkomponenten A) bis D), wobei man sich der üblichen Mischaggregate wie beispielsweise Knetern, Disolvern oder Butterflymischern bedient.

Die Viskosität der erfindungsgemäßen Mischungen kann beispielsweise durch Variation des Gehalts an copolymerisierbaren Monomeren in der Polyesterharz-Komponente A) und/oder durch geeignete Wahl der Menge der Komponente B) eingestellt werden. Es sind sowohl niedrigviskose Einstellung (Spritzspachtel) als auch hochviskose Einstellungen, wie sie bei Spachtelmassen üblich sind, denkbar.

Die erfindungsgemäßen Mischungen finden vorzugsweise als Spachtelmassen auf dem Autoreparatursektor Anwendung.

Die Aushärtung der Spachtelmassen geschieht durch Copolymerisation der ungesättigten Polyesterharze und der copolymerisierbaren Monomeren. Die Copolymerisation wird in an sich bekannter Weise durch Zusatz geeigneter Polymerisationsinitiatoren ausgelöst. Als solche kommen in der Hauptsache organische Peroxide, Hydroperoxide oder deren Mischungen in Betracht. Gebräuchlich sind z.B. Benzoylperoxid, Cyclohexanonhydroperoxid, Methylethylketonperoxid, Methylisobutylketonperoxid, Lauroylperoxid, Di.-t.-butylperoxid oder Cumolhydroperoxid.

Die in den nachfolgenden Beispielen genannten Teile sind Gewichtsteile, Prozentangaben beziehen sich auf das Gewicht.

Beispiele

Polyesterharz A:

65 %ig in Styrol gelöster, ungesättigter Polyester, hergestellt aus 0,25 Mol Maleinsäureanhydrid, 0,75 Mol Tetrahydrophthalsäureanhydrid und 1,05 Mol Diethylenglykol in Gegenwart von 0,03 % Toluhydrochinon. Dem ungesättigten Polyester werden 5,5 % N,N-Diethyl-m-toluidin zugesetzt (Vorbeschleunigung).

4

Haftvermittler C (allgemeine Herstellungsvorschrift)

Die Komponenten b) bis e) werden zur Herstellung des Vorkondensats (1. Stufe) entsprechend der nachstehenden tabellarischen Zusammenfassung jeweils unter Zusatz von 0,75 % p-Toluolsulfonsäure, 0,1 % Di-t-butylhydrochinon und 0,1 % p-Methoxyphenol 70 %ig in Toluol gelöst und solange unter Rückfluß gehalten, bis sich kein Wasser mehr abscheidet. Nach Abdestillation des Toluols wird die Komponente a) zugegeben und die jeweilige Mischung während 10 Stunden bei 80 °C gehalten. Die Mengenangaben in der nachfolgenden Tabelle 1 beziehen sich auf die Anzahl der Mole. Die Haftvermittler C1 bis C4 sind erfindungsgemäß; Haftvermittler C5 ist nicht erfindungsgemäß.

Tabelle 1

| | Haftvermittler | | | | |
|---|---|---|---|---|---|
| | $C_1$ | $C_2$ | $C_3$ | $C_4$ | $C_5$ |
| 1. Stufe | | | | | |
| Maleinsäureanhydrid (b) | | | | 0,5 | |
| Trimethylolpropan (c) | 1,0 | | | | |
| 4-fach ethoxyliertes Trimethylolpropan (c) | | 1,0 | | 1,0 | 1,0 |
| 3-fach propoxyliertes Trimethylolpropan (c) | | | 1,0 | | |
| Propylenglykol-1,2 (d) | | | | 0,5 | |
| Acrylsäure (e) | 2,0 | 2,0 | 2,0 | 1,0 | 2,0 |
| 2. Stufe | | | | | |
| Maleinsäureanhydrid (a) | 1,0 | 1,0 | 1,0 | 0,5 | |
| Tetrahydrophthalsäureanhydrid (a) | | | | | 1,0 |
| Viskosität (mPa.s, 23 °C) | 3000 | 1000 | 700 | 13000 | 12000 |
| Säurezahl (mg KOH/g) | 180 | 120 | 110 | 94 | 110 |

Zu Vergleichszwecken wurde als Haftvermittler mitgeprüft:

$C_6$ dimere Acrylsäure

$C_7$ Adukt aus 1,0 Mol Maleinsäureanhydrid und 1,0 Mol Trimethylolpropandiallylether

Herstellung der Spachtelmassen

Für die Spachtelherstellung wird folgende Rezeptur verwendet:

| | Teile |
|---|---|
| ungesättigtes, styrolisches Polyesterharz A | 55 |
| Titandioxid (Rutiltyp) | 4 |
| Talkum | 112,5 |
| Kieselsäure, hochdispers | 1 |
| Thixotropiemittel (auf Basis hydr. Rizinusöl) | 0,75 |
| Netzmittel (Byk W 980) | 1,25 |
| Haftvermittler C | 1,7 |

Diese Bestandteile werden im Butterflymischer bei bis zu maximal 50 °C gründlich homogenisiert.

Zur Prüfung der Haftfestigkeit werden je 100 g Spachtelmasse mit 2,5 % einer handelsüblichen, 50 %igen Benzoylperoxidpaste verrührt. Die Masse wird dann in ca. 1 mm Schichtdicke auf entfettete verzinkte Stahlblechplatten aufgetragen und bei Raumtemperatur getrocknet. Nach 1 und 24 Stunden wird das Blech geknickt und die Haftung durch Beurteilung der auf dem Blech verbleibenden Spachtelmengen bestimmt. Dabei werden folgende Bewertungen gewählt:

**EP 0 310 972 B1**

| Bewertung | verbleibende Spachtelmenge |
|-----------|---------------------------|
| 0 | sehr viel |
| 1 | viel |
| 2 | Reste |
| 3 | wenig |
| 4 | sehr wenig |
| 5 | keine |

Alle Spachtelmassen trockneten schnell durch und ergaben gut schleifbare Oberflächen.

Tabelle 2 zeigt die Ergebnisse der Prüfungen auf feuer- und elektrolytisch verzinkten Blechen.

Tabelle 2

| | Beispiele | | | | Vergleichsbeispiele | | | |
|---|---|---|---|---|---|---|---|---|
| | 1 | 2 | 3 | 4 | 5 | 6 | 7 | 8 |
| Haftvermittler | $C_1$ | $C_2$ | $C_3$ | $C_4$ | $C_5$ | $C_6$ | $C_7$ | - |
| elektrolytisch verzinkt: | | | | | | | | |
| Haftnung nach | | | | | | | | |
| 1 h | 1 | 0 | 0 | 1 | 1 | 5 | 5 | 2 |
| 24 h | 1 | 0 | 0 | 1 | 1 | 4 | 5 | 2 |
| feuerverzinkt: | | | | | | | | |
| Haftung nach | | | | | | | | |
| 1 h | 1 | 2 | 1 | 1 | 3 | 3 | 5 | 5 |
| 24 h | 1 | 1 | 1 | 1 | 3 | 2 | 5 | 5 |

Nur die Beispiele der erfindungsgemäßen Spachtelmassen erreichen sowohl auf feuer- als auch auf elektrolytisch verzinkten Blechen ein hohes Haftvermögen.

**Patentansprüche**

**1.** Unter dem Einfluß von Radikalen härtbare Mischungen enthaltend

A) 100 Gew.-Teile einer ungesättigten Polyesterharz-Komponente, bestehend aus einer Mischung aus (i) mindestens einem $\alpha,\beta$-ethylenisch ungesättigten Polyester und (ii) mindestens einem copolymerisierbaren, olefinisch ungesättigten Monomeren, wobei in der Mischung 30 bis 75 Gew.-Teile der Komponente (i) und 70 bis 25 Gew.-Teile der Komponente (ii) vorliegen,
B) insgesamt 100 bis 300 Gew.-Teilen mindestens eines inerten Füllstoffs,
C) 0,5 bis 5 Gew.-Teilen eines Haftvermittlers
und gegebenenfalls
D) weitere Hilfs- und Zusatzstoffe,

dadurch gekennzeichnet, daß es sich bei der Komponente C) um mindestens einen (Meth)-acryloylgruppen enthaltenden Polyester handelt, der hergestellt worden ist, indem man
a) 0,5 bis 1,0 Mol einer ungesättigten Dicarbonsäure-Komponente, bestehend aus mindestens einer $\alpha,\beta$-ungesättigten Dicarbonsäure und/oder mindestens einem Anhydrid einer derartigen Säure

mit einem Hydroxylgruppen aufweisenden Kondensationsprodukt aus

b) 0 bis 0,5 Mol einer Dicarbonsäure-Komponente, bestehend aus mindestens einer aromatischen, gesättigten oder ungesättigten aliphatischen und/oder gesättigten oder ungesättigten cycloaliphatischen Dicarbonsäure und/oder mindestens einem Anhydrid einer derartigen Säure,
c) 0, 5 bis 1,0 Mol einer höherfunktionellen Polyolkomponente, bestehend aus mindestens einem,

6

gegebenenfalls Ethergruppen aufweisenden 3- oder 4-wertigen Alkohol des Molekulargewichtsbereichs 92 bis 500,

d) 0 bis 0,5 Mol einer Diolkomponente, bestehend aus mindestens einem, gegebenenfalls Etherbrücken aufweisenden zweiwertigen Alkohol des Molekulargewichtsbereichs 62 bis 300 und

e) 1,0 bis 2,0 Mol einer ungesättigten Monocarbonsäure-Komponente bestehend aus Acrylsäure, Methacrylsäure oder einem Gemisch dieser Säuren

unter Esterbildung zur Reaktion bringt, wobei die Mengenverhältnisse der Komponenten b) bis e) so gewählt werden, daß nach der Herstellung des Kondensats noch 0, 5 bis 1,0 Mol an freien Hydroxylgruppen vorliegen.

2. Verwendung der Mischungen gemäß Anspruch 1 als Spachtelmasse.

## Claims

1. Radical-curing mixtures containing

A) 100 parts by weight of an unsaturated polyester resin component consisting of a mixture of (i) at least one α,β-ethylenically unsaturated polyester and (ii) at least one copolymerizable, olefinically unsaturated monomer, 30 to 75 parts by weight of component (i) and 70 to 25 parts by weight of component (ii) being present in the mixture,

B) a total of 100 to 300 parts by weight of at least one inert filler,

C) 0.5 to 5 parts by weight of a coupling agent

and, optionally,

D) other auxiliaries and additives,

characterized in that component C) is at least one polyester containing (meth)acryloyl groups which has been prepared by esterification of

a) 0.5 to 1.0 mol of an unsaturated dicarboxylic acid component consisting of at least one α,β-unsaturated dicarboxylic acid and/or at least one anhydride of such an acid

with a hydroxyl-functional condensation product of

b) 0 to 0.5 mol of a dicarboxylic acid component consisting of at least one aromatic, saturated or unsaturated aliphatic and/or saturated or unsaturated cycloaliphatic dicarboxylic acid and/or at least one anhydride of such an acid,

c) 0.5 to 1.0 mol of a relatively high-functionality polyol component consisting of at least one tri- or tetrahydric alcohol optionally containing ether groups and having a molecular weight in the range from 92 to 500,

d) 0 to 0.5 mol of a diol component consisting of at least one dihydric alcohol optionally containing ether bridges and having a molecular weight in the range from 62 to 300 and

e) 1.0 to 2.0 mol of an unsaturated monocarboxylic acid component consisting of acrylic acid, methacrylic acid or a mixture of these acids,

the quantities in which components b) to e) are used being selected so that 0.5 to 1.0 mol of free hydroxyl groups are still present after preparation of the condensate.

2. The use of the mixtures claimed in claim 1 as a surfacing compound.

## Revendications

1. Mélanges durcissables sous l'influence de radicaux, contenant

A) 100 parties en poids d'un composant résine de polyester non saturé, constitué d'un mélange (i) d'au moins un polyester à non-saturation α,β-éthylénique et (ii) d'au moins un monomère copolymérisable à non-saturation oléfinique, ce mélange renfermant 30 à 75 parties en poids du composant (i) et 70 à 25 parties en poids du composant (ii),

B) au total 100 à 300 parties en poids d'au moins une charge inerte,

C) 0,5 à 5 parties en poids d'un promoteur d'adhésion

et, le cas échéant

D) d'autres substances auxiliaires et d'autres additifs,

caractérisés en ce que le composant C) est au moins un polyester contenant des groupes (méth)-acryloyle, qui a été préparé par réaction

a) de 0,5 à 1,0 mole d'un composant acide dicarboxylique non saturé, constitué d'au moins un acide dicarboxylique à non-saturation $\alpha,\beta$ et/ou d'au moins un anhydride d'un tel acide

avec un produit de condensation, porteur de groupes hydroxyle, de

b) 0 à 0,5 mole d'un composant acide dicarboxylique constitué d'au moins un acide dicarboxylique aromatique, aliphatique saturé ou non saturé et/ou cycloaliphatique saturé ou non saturé et/ou d'au moins un anhydride d'un tel acide,

c) 0,5 à 1,0 mode d'un composant polyol de fonctionnalité élevée, constitué d'au moins un alcool trivalent ou tétravalent portant éventuellement des groupes éther, de poids moléculaire compris dans la plage de 92 à 500,

d) 0 à 0,5 mole d'un composant diol, constitué d'au moins un alcool divalent, portant éventuellement des ponts éther, de poids moléculaire compris dans la plage de 62 à 300 et

e) 1,0 à 2,0 moles d'un composant acide monocarboxylique non saturé constitué d'acide acrylique, d'acide méthacrylique ou d'un mélange de ces acides,

avec formation d'un ester, les proportions quantitatives des composants b) à e) étant choisies de manière qu'il reste encore 0,5 à 1,0 mole de groupes hydroxyle libres après la production du condensat.

2. Utilisation des mélanges suivant la revendication 1 comme enduit à spatuler.